# EUROPÄISCHE PATENTSCHRIFT

(11) **EP 0 482 389 B1**
(45) Veröffentlichungstag und Bekanntmachung des Hinweises auf die Patenterteilung: **31.08.1994**
(21) Anmeldenummer: 91116758.3
(22) Anmeldetag: 01.10.1991
(51) Int. Cl.: B60R 21/20

(54) **Befestigung eines Gassacks**
Fixation of an airbag
Fixation d'un coussin gonflable

(30) Priorität: 25.10.1990 DE 9014749 U
(43) Veröffentlichungstag der Anmeldung: 29.04.1992
(73) Patentinhaber: TRW REPA GMBH, 73553 Alfdorf (DE)
(72) Erfinder: Berger, Jürgen, W-7075 Mutlangen (DE); Lang, Norbert, W-7078 Mulfingen (DE)
(74) Vertreter: Degwert, Hartmut, Dipl.-Phys.

(56) Entgegenhaltungen:
- WO-A-90/03901
- DE-A- 3 733 436
- FR-A- 2 164 248
- FR-A- 2 335 373

## Beschreibung

Die Erfindung betrifft die Befestigung eines Gassacks an dem Aufnahmegehäuse eines Gassack-Rückhaltesystems für Fahrzeuge, insbesondere auf der Beifahrerseite.

Die Befestigung des Gassacks am Aufnahmegehäuse des Gassack-Rückhaltesystems ist kritisch, da sie hohen mechanischen Beanspruchungen standhalten und weitgehend gasdicht sein muß. Einige in Betracht kommende Befestigungsmöglichkeiten zeigt die WO90/03901. Danach ist es bekannt, den Gassack entlang der Berandung seiner Einblasöffnung mit einem Wulst zu versehen und den Wulst mit einem daran angepaßten Profilelement formschlüssig am Aufnahmegehäuse festzulegen. In einer Ausführungsform für einen Beifahrer-Gassack ist die Einblasöffnung reckteckig.

Der Erfindung liegt die Aufgabe zugrunde, die bekannte Gassack-Befestigung dahingehend weiterzubilden, daß eine besonders einfache Montage möglich ist.

Diese Aufgabe wird bei einer gattungsgemäßen Gassack-Befestigung, wie im Oberbegriff des Patentanspruchs 1 angegeben, durch die in dessen kennzeichnendem Teil angegebenen Merkmale gelöst. Die Montage des Profilelements am Aufnahmegehäuse wird dadurch erleichtert, daß die Befestigungslappen in entsprechende Einsteckschlitze des Aufnahmegehäuses eingesteckt werden. Diese Schlitze wirken als Scharnier, indem sie das Profilelement beim Umklappen über den Wulst der Berandung des Gassacks in eine Stellung, in der sie beispielsweise durch Niete befestigt werden, führen.

Vorteilhafte Weiterbildungen der Erfindung sind in den Unteransprüchen angegeben.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
- Fig. 1: eine schematische Seitenansicht eines Aufnahmegehäuses eines Gassack-Rückhaltesystems für die Beifahrerseite eines Fahrzeugs;
- Fig. 2: eine Draufsicht des in Fig. 1 gezeigten Gehäuses;
- Fig. 3: eine Schnittansicht der Befestigung des Gassacks am Aufnahmegehäuse in gegenüber den Fig. 1 und 2 stark vergrößertem Maßstab;
- Fig. 4: eine Draufsicht eines Profilelements der in Fig. 3 gezeigten Befestigung; und
- Fig. 5: eine auseinandergezogene Darstellung zur Veranschaulichung der Montageschritte, die für die Herstellung der Befestigung nach Fig. 3 erforderlich sind.

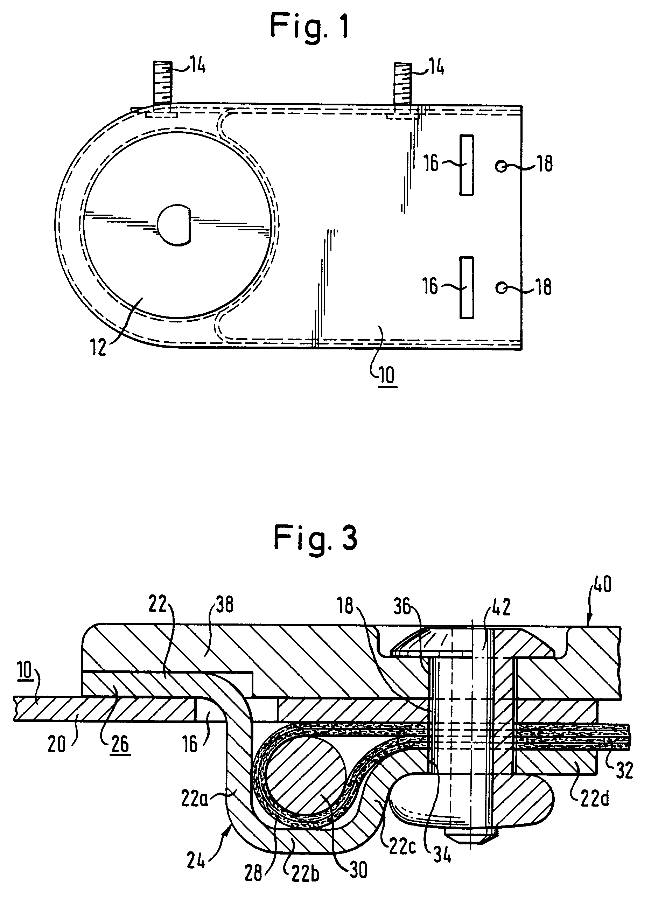

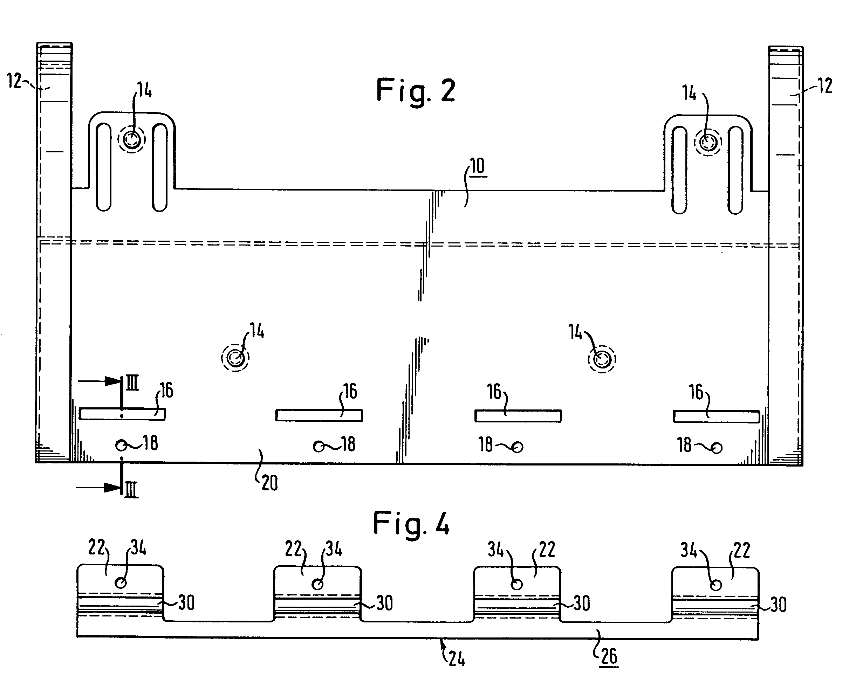

Das in den Fig. 1 und 2 gezeigte Aufnahmegehäuse 10 ist allgemein quaderförmig, mit einer offenen Vorderseite und Seitenwänden, die mit einem halbkreisförmig gerundeten Ende über die Quaderform des Aufnahmegehäuses 10 hinausstehen. Zwischen den Enden der Seitenwände ist ein zylinderförmiger Gasgenerator 12 angeordnet. An der Oberseite des Aufnahmegehäuses 10 sind Gewindebolzen 14 zur Befestigung am Fahrzeugaufbau vorgesehen. Entlang der offenen Vorderseite des Aufnahmegehäuses 10 sind in seiner Wandung Einsteckschlitze 16 mit jeweils einer zugeordneten Befestigungsöffnung 18 gebildet, deren Funktion weiter unten beschrieben wird.

Der Innenraum des Aufnahmegehäuses 10 dient neben der Unterbringung des Gasgenerators 12 zur Aufnahme des gefalteten, in den Fig. 1 und 2 nicht gezeigten Gassacks.

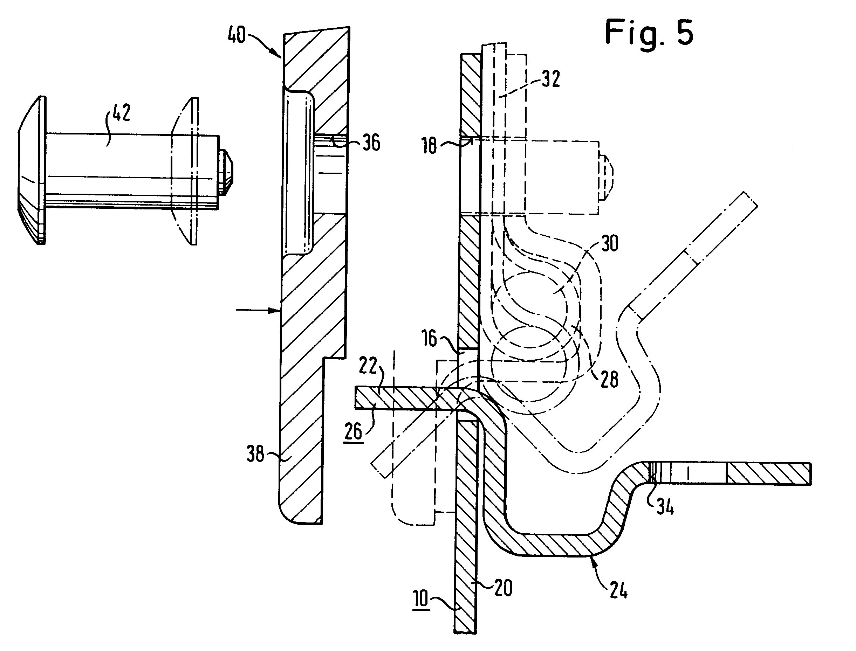

Die Befestigung des Gassacks am Aufnahmegehäuse 10 ist in den Fig. 3 und 5 dargestellt. Der in Fig. 3 gezeigte Schnitt ist etwa durch die Linie III-III in Fig. 2 geführt. Er zeigt die Wandung 20 des Aufnahmegehäuses 10 im Bereich eines Einsteckschlitzes 16 und einer Befestigungsöffnung 18. Von der Außenseite der Wandung 20 her ist durch den Einsteckschlitz 16 hindurch ein profilierter Befestigungslappen 22 eines in Fig. 4 gezeigten Profilelements 24 eingesteckt. Das Profilelement 24 besteht aus einem streifenförmigen Hauptabschnitt 26 und mehreren entlang einem Längsrand desselben im Abstand voneinander angeordneten Befestigungslappen 22. Jeder Befestigungslappen 22 besteht aus einem rechtwinklig von dem Hauptabschnitt 26 abgebogenen ersten Abschnitt 22a, einem von diesem rechtwinklig und parallel zum Hauptabschnitt 26 abgebogenen zweiten Abschnitt 22b, einem parallel zu dem Abschnitt 22a rechtwinklig abgebogenen dritten Abschnitt 22c und einem von diesem rechtwinklig und parallel zum Hauptabschnitt 26 abgebogenen Endabschnitt 22d. Dieser Endabschnitt 22d ist zwar parallel zu dem Hauptabschnitt 26, jedoch gegenüber diesem versetzt. Die Abschnitte 22a, 22b und 22c des Profilelements 24 bilden eine allgemein rinnenförmige Struktur, die einen entlang der Berandung der Einblasöffnung des Gassacks gebildeten Wulst 28 formschlüssig hintergreift. Dieser Wulst 28 ist durch einen in den Saum der Berandung eingenähten Verstärkungsring 30 gebildet, der beispielsweise aus einem Metalldraht besteht. Der Saum des Gassacks 32 besteht aus vier im Bereich zwischen dem Endabschnitt 22d des Profilelements 24 und der Wandung 20 übereinandergelegten Gewebelagen. Der Endabschnitt 22d des Profilelements 24 ist mit einer Befestigungsöffnung 34 versehen, die mit der entsprechenden Befestigungsöffnung 18 der Wandung 20 sowie einer Befestigungsöffnung 36 im Randbereich 38 einer Abdeckung ausgefluchtet ist. Diese Abdeckung 40, deren Randbereich 38 abgewinkelt ist, verschließt die offene Vorderseite des Aufnahmegehäuses 10. Die miteinander ausgefluchteten Befestigungsöffnungen 36, 18 und 34 werden von einem Niet 42 durchsetzt, der den Randbereich 38 der Abdeckung, die Wandung 20, den Saum des Gassacks 32 und den Endabschnitt 22d des Profilelementes 24 zusammenhält. Dabei übergreift der Randabschnitt 38 der Abdeckung 40 auch den Hauptabschnitt 26 des Profilelements 24.

Das in Fig. 4 gezeigte Profilelement 24 ist passend zu einer Längsseite des Aufnahmegehäuses 10 ausgebildet, wie die Gegenüberstellung der Fig. 2 und 4 leicht erkennen läßt. Insbesondere sind die Befestigungslappen 22 passend zu den Einsteckschlitzen 16 und Befestigungsöffnungen 18 in der Wandung 20 des Aufnahmegehäuses 10 angeordnet. Für die Schmalseiten des Aufnahmegehäuses 10 werden kürzere Profilelemente verwendet, die nur zwei Befestigungslappen aufweisen, passend zu der in Fig. 1 gezeigten Anordnung der Einsteckschlitze 16 und Befestigungsöffnungen 18.

Wie aus Fig. 5 ersichtlich ist, geschieht die Montage in folgender Reihenfolge: Zunächst werden die Befestigungslappen 22 der Profilelemente 24 von der Außenseite des Aufnahmegehäuses 10 her durch die Einsteckschlitze 16 eingeführt; dann wird die Berandung der Einblasöffnung des Gassacks 32 mit ihrem Wulst 30 in das Aufnahmegehäuse 10 eingelegt. Anschließend wird die Abdeckung 40 über die offene Vorderseite des Aufnahmegehäuses 10 geschoben, wobei ihr Randbereich 38 den Hauptabschnitt 26 der Profilelemente 24 übergreift. Schließlich werden die Niete 42 durch die Befestigungsöffnungen 36, 18 und 34 eingeschoben und verstaucht. Es ist ersichtlich, daß diese Montage in wenigen Schritten ausgeführt werden kann, die auch für eine Automatisierung geeignet sind.

Gegenüber herkömmlichen Befestigungsmethoden ergeben sich zahlreiche Vorteile. Durch die Verwendung des Verstärkungselementes 30, das als geschlossener Stahlring ausgebildet werden kann, ergibt sich eine erhebliche Steigerung der mechanischen Beanspruchbarkeit, insbesondere in den Eckbereichen der Einblasöffnung. Die Kraftverteilung zwischen Luftsack und Aufnahmegehäuse ist sehr gleichmäßig. Durch die Profilelemente wird das Aufnahmegehäuse zusätzlich verstärkt. Die Montage wird besonderes vereinfacht, weil mit einem gemeinsamen Nietvorgang die Abdeckung 40, das Aufnahmegehäuse 10, der Gassack 32 und die Profilelemente 24 miteinander verbunden werden können. Die Niete können relativ schwach dimensioniert werden, da sie nur auf Abscherung beansprucht werden. Die Montage wird weiterhin dadurch erleichtert, daß die Befestigungsöffnungen im Aufnahmegehäuse als Langlöcher ausgebildet werden können, so daß sich ein Toleranzausgleich ergibt. Schließlich besteht ohne größere konstruktive Änderungen die Möglichkeit, die Profilelemente statt auf der Innenseite auf der Außenseite des Aufnahmegehäuses 10 zu montieren.

## Patentansprüche

1. Befestigung eines Gassacks an dem Aufnahmegehäuse eines Gassack-Rückhaltesystems für Fahrzeuge, insbesondere auf der Beifahrerseite, bei welcher der Gassack (32) entlang der Berandung seiner reckteckförmigen Einblasöffnung mit einem eingenähten, einen Wulst (28) bildenden Verstärkungselement (30) versehen ist und die mit dem Verstärkungselement (30) versehene Berandung mittels eines Profilelements (24), das den Wulst (28) der Berandung mit einem rinnenförmigen Bereich übergreift, formschlüssig an dem Aufnahmegehäuse (10) festgelegt ist, dadurch gekennzeichnet, daß das gerade ausgebildete Profilelement (24) mehrere den Wulst (28) der Berandung übergreifende Befestigungslappen (22) und einen streifenförmigen Hauptabschnitt (26) aufweist, und daß die Befestigungslappen (22) entlang einer Seite des Hauptabschnitts (26) des Profilelements (24) in Längsrichtung desselben beabstandet angeordnet und durch entsprechende Einsteckschlitze (16) des Aufnahmegehäuses (10) von dessen Außenseite her eingesteckt sind.

2. Befestigung nach Anspruch 1, **dadurch gekennzeichnet,** daß die Befestigungslappen (22) mit Befestigungsöffnungen (34) versehen sind und daß die Befestigungslappen (22) des Profilelements (24) mittels die Befestigungsöffnungen (34) und entsprechende Befestigungsöffnungen (18) des Aufnahmegehäuses (10) durchsetzender Niete (42) am Aufnahmegehäuse befestigt sind.

3. Befestigung nach Anspruch 2, **dadurch gekennzeichnet,** daß die Befestigungslappen (22) bezüglich des Wulstes (28) auf der Seite des Gassacks (32) gelegen sind und die Niete (42) sich auch durch die übereinandergelegten, das Verstärkungselement (30) umgebenden Gewebelagen des Gassacks (32) erstrecken.

4. Befestigung nach Anspruch 2 oder 3, **dadurch gekennzeichnet,** daß mittels der Niete (42) zugleich eine Abdeckung (40) für das dem Fahrgastraum zugewandte, offene Ende des Aufnahmegehäuses (10) an diesem befestigt ist.

5. Befestigung nach einem der Ansprüche 1 bis 4, **dadurch gekennzeichnet,** daß die Befestigungslappen (22) einerseits und der Hauptabschnitt (26) des Profilelements (24) andererseits in zwei parallelen, gegeneinander versetzten Ebenen gelegen sind.

6. Befestigung nach Anspruch 4 oder 5, **dadurch gekennzeichnet,** daß die Abdeckung (40) mit ihrem abgewinkelten Randbereich (38), durch den sich die Niete (42) erstrecken, den Hauptabschnitt (26) des Profilelements (24) übergreift, der auf die Außenseite des Aufnahmegehäuses (10) umgelegt ist.

## Claims

1. Attachment of a gas bag to the accommodating housing of a gas bag restraining system for vehicles, in particular on the front passenger side, the gas bag (32) of which is provided along the edge of its rectangular inflation opening with a sewn-in reinforcing element (30) forming a bead (28) and the edge provided with the reinforcing element (30) is fixed to the receiving housing (10) in form-fit manner via a profile element (24) which engages over the bead (28) by means of a groove-like region, characterized in that the profile element (24) which is formed straight comprises a plurality of attachment tabs (22) engaging over the bead (28) of the edge and a strip-like main portion (26) and that the attachment tabs (22) are arranged spaced apart along one side of the main portion of the profile element (24) in the longitudinal direction thereof and inserted via corresponding insert slots (16) of the receiving housing (10) from the outside of the latter.

2. Attachment according to claim 1, characterized in that the attachment tabs (22) are provided with attachment openings (34) and that the attachment tabs (22) of the profile element (24) are secured to the receiving housing by means of rivets (42) passing through the attachment openings (34) and corresponding attachment openings (18) of the receiving housing (10).

3. Attachment according to claim 2, characterized in that with respect to the bead (28) the attachment tabs (22) are located on the side of the gas bag (32) and the rivets (42) also extend through the superimposed fabric layers of the gas bag (32) surrounding the reinforcing element.

4. Attachment according to any one of claims 2 or 3, characterized in that by means of the rivets (42) at the same time a cover (40) for the open end of the receiving housing (10) facing the passenger compartment is secured to said housing.

5. Attachment according to any one of claims 1 to 4, characterized in that the attachment tabs (22) on the one hand and the main portion (26) of the profile element (24) on the other hand lie in two parallel planes offset with respect to each other.

6. Attachment according to claim 4 or 5, characterized in that with its angled edge region (38) through which the rivets (42) extend the cover (40) engages over the main portion (26) of the profile element (24), said portion being folded over onto the outer side of the receiving housing (10).

## Revendications

1. Fixation d'un coussin gonflable sur le boîtier de logement d'un système de retenue de coussin gonflable pour véhicules automobiles, en particulier du côté passager, dans laquelle le coussin gonflable (32) est pourvu, le long de la bordure de son ouverture rectangulaire de gonflage, d'un élément de renfort (30) cousu à l'intérieur, formant un bourrelet (28) et la bordure pourvue de l'élément de renfort (30) est fixée par concordance de forme sur le boîtier de logement (10), au moyen d'un élément profilé (24), qui passe sur le bourrelet (28) de la bordure avec une zone en forme de gorge, caractérisée en ce que l'élément profilé (24) rectiligne présente plusieurs pattes de fixation (22) passant sur le bourrelet (28) de la bordure ainsi qu'une partie principale (26) en forme de bande, et en ce que les pattes de fixation (22) sont disposées espacées dans la direction longitudinale, le long d'un côté de la partie principale (26) de l'élément profilé (24) et sont enfilées à travers des fentes d'insertion (16) appropriées du boîtier de logement (10), à partir de son côté extérieur.

2. Fixation selon la revendication 1, caractérisée en ce que les pattes de fixation (22) sont pourvues d'ouvertures de fixation (34) et en ce que les pattes de fixation (22) de l'élément profilé (24) sont fixées sur le boîtier de logement, au moyen de rivets (42) traversant les ouvertures de fixation (34) ainsi que des ouvertures de fixation (18) correspondantes du boîtier de logement (10).

3. Fixation selon la revendication 2, caractérisée en ce que les pattes de fixation (22) sont situées, par rapport au bourrelet (28), sur le côté du coussin gonflable (32) et les rivets (42) traversent aussi les couches de tissu superposées du coussin gonflable (32) qui entourent l'élément de renfort (30).

4. Fixation selon les revendications 2 ou 3, caractérisée en ce qu'il est fixé en même temps sur le boîtier de logement (10), au moyen des rivets (42), un couvercle (40) pour l'extrémité ouverte, tournée vers l'habitacle, du boîtier de logement (10).

5. Fixation selon l'une des revendications 1 à 4, caractérisée en ce que les pattes de fixation (22) d'une part et la partie principale (26) de l'élément profilé (24) d'autre part sont placées dans deux plans parallèles, décalés l'un par rapport à l'autre.

6. Fixation selon la revendication 4 ou 5, caractérisée en ce que le couvercle (40) passe, avec sa zone de bordure (38) coudée, que traversent aussi les rivets (42), sur la partie principale (26) de l'élément profilé (24) qui est repliée sur le côté extérieur du boîtier de logement (10).
